# EUROPEAN PATENT APPLICATION

(11) **EP 0 957 348 A1**
(43) Date of publication of application: **17.11.1999**
(21) Application number: 99303775.3
(22) Date of filing: 14.05.1999
(51) Int. Cl.: G01K 1/08

(54) **Sensor**

(30) Priority: 15.05.1998 EP 98303879
(71) Applicant: SATCHWELL CONTROL SYSTEMS LIMITED, Slough Berkshire SL1 4UH (GB)
(72) Inventor: Matthews, Dene, Slough, Berkshire SL1 4UH (GB)
(74) Representative: Haley, Stephen

(57) **Abstract**

A sensor comprises a sensing element provided on one end of an extendable shaft, a mounting means provided at the other end of the extendable shaft for mounting the shaft, and electrical connections passing from the sensing element along the length of the shaft.

## Description

Heating and ventilation and other systems often include a control loop including a sensor to monitor a parameter, for example the temperature of a heating or cooling fluid or the temperature or humidity of the environment, a corrective element such as a heater, and a control circuit for comparing the detected parameter with a required threshold and controlling the corrective element based on the result of the comparison.

A common sensor for use in heating and ventilation systems is a thermistor which is located either directly in an air duct or in a pocket provided in a water tank or pipe. To locate the thermistor within the fluid whose temperature is to be monitored, the sensor is provided on one end of a hollow fixed length rod with electrical connections from the sensor passing through the body of the rod to a terminal block at the opposite end of the rod. For different applications it is necessary to have different length rods to correctly position the sensor element. It is common to have 300mm and 450mm length rods for location of a sensor in an air duct, and 125mm and 200mm length rods for provision in the pocket of a water system.

In the case of a water monitoring system, the pocket comprises a tube which is closed at one end. The closed end is provided in the fluid path. The open end of the tube opens to the outside of the pipe or tank containing the water. In use, the rod including the temperature sensing element is located in the pocket with the sensor element contacting the closed end. The other end of the rod is mechanically attached to the body of the pipe or tank. Changes in the temperature of the water are transmitted through the end wall of the pocket and cause a corresponding change in the resistivity of the thermistor. This resistance can be monitored.

To ensure that there is a good thermal response to changes in the temperature of the water, it is important that the sensor is pressed against the end of the pocket. Therefore it is necessary for the length of the rod to be matched closely to the depth of the tube. As the depth of the pockets may vary, and in particular different manufacturers typically use different length pockets, this may not always be easy. It is therefore common when fitting a new sensor element to replace the pocket with one matched to the length of the sensor rod. This requires that the system be drained so that the water does not leak from the system when the pocket is removed. It is also known to provide a spring bias which supports the temperature sensing element to bias this towards the closed end of the pocket. This is successful in ensuring that the sensor element abuts the end of the pocket where there is a small difference between the length of the pocket and the length of the rod, but is unable to compensate for larger differences. The provision of a spring bias is also expensive.

Where the sensor is not positioned in the correct location, the determined temperature will not correspond to the temperature which is expected and therefore the corrective element will be incorrectly controlled. Where the sensor should be located at the bottom of a pocket, but, due to the length of the rod is positioned away from the end of the pocket, the reaction time of the sensor will be reduced and therefore the control of the corrective element will lag behind changes in the parameter which is monitored.

With the conventional sensors, it is not possible to merely cut the end off the rod to make this of the correct length, since in doing so either the end including the sensor will be removed, or the wires passing through the rod will be cut so that the sensor cannot be connected to the control unit.

In practice it is therefore necessary to stock a number of sensors having different length support rods for different applications. This leads to a large cost. It is also not unusual for the wrong length sensor device to be supplied for a particular application, and, in many instances, there is no sensor of a length required for a particular application. It is therefore known for installers to provide additional brackets and other supports to mount a sensor having an inappropriate length for a given application.

According to the present invention, there is provided a sensor comprising a sensing element provided on one end of an extendable shaft wherein the extendable shaft is a telescopic shaft comprising a number of coaxial sections which are slidable with respect to each other to vary the length of the shaft; a mounting means provided at the other end of the extendable shaft for mounting the shaft; and electrical connections passing from the sensing element along the length of the shaft to the mounting means and fixed thereto.

With the sensor according to the present invention, it is only necessary to stock a single type of sensor which can be used for all applications rather than stocking sensors of different lengths for different applications. This means that it is not necessary to stock as many sensors and therefore is economically advantageous. As the sensor can be shortened to its minimum length, there is also less packaging required compared to the longer fixed length sensor, and therefore packaging and transportation costs are reduced. Furthermore, due to the adjustable length of the rod, the sensor can be used in any application yet can be accurately positioned at exactly the required position. It is therefore not necessary to replace a pocket so that it corresponds to the length of the sensor, and therefore it is not necessary to drain a system down to replace a pocket. The present invention means that the sensor can always be abutted against the end of a pocket, thereby ensuring optimum location of the sensor for rapid response and good thermal conductivity. Furthermore, connection to the sensor is simple, with no need for the cutting or extension of wires within the sensor dependent on sensor length.

The shaft preferably includes at least four sections. This allows the shaft to extend from a minimum length of about 100mm to a maximum length of about 350mm. Advantageously, the shaft may comprise five sections allowing the shaft to extend to a maximum length of 450mm.

Preferably the sensor element is a temperature or humidity sensor, and more preferably is a thermistor. In this case it is advantageous for the sensor to be covered in heat paste to give good thermal conductivity between the bottom of a pocket and the sensor where the sensor is provided in a pocket.

Preferably the sensor has a maximum width allowing it to be provided in most conventional pockets. Typically pockets have an internal diameter of between 6 and 12mm, and accordingly the sensor advantageously has a maximum width of less than 6mm.

An example of the present invention will be described in accordance with the accompanying drawings, in which:
Fig. 1 is a side view of a sensor in accordance with the present invention both in an extended un-installed state and installed into a pocket;
Figs. 2A and 2B are side cross-sectional views of a sensor according to the present invention in an extended and un-extended state;
Fig. 3 is a schematic diagram of an air duct having sensors according to the present invention installed therein.

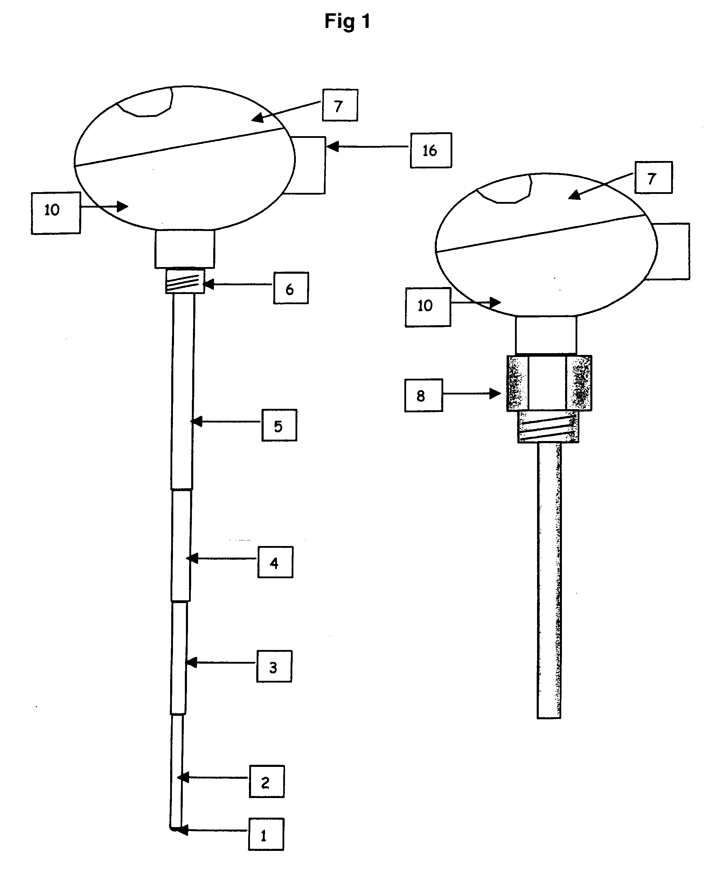

Referring to Figure 1, a pipe (not shown) contains water or other fluid (not shown) which may be used in a heating or ventilation system. The pipe includes a pocket 8 which comprises a tube of stainless steel or brass having an opening to the outside of the pipe and a closed bottom which, in use, is below the level of water in the pipe.

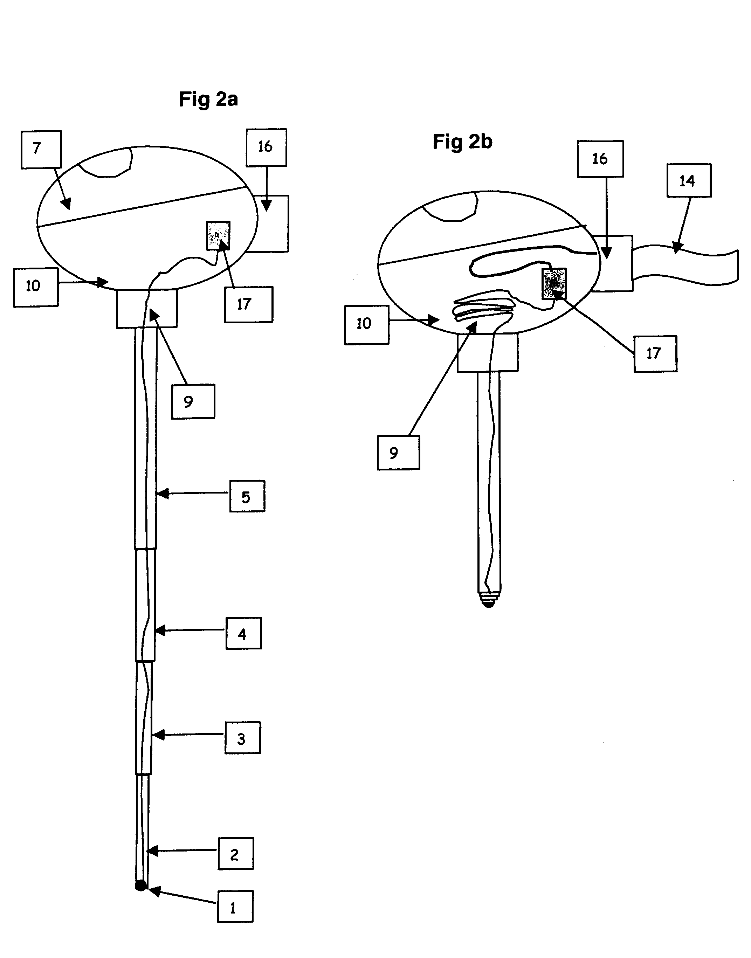

Referring to Figures 2a and 2b, a thermistor 1 is mounted on the end of a telescopic shaft which includes four sections 2,3,4,5. The sections 2,3,4,5 are provided coaxially and are longitudinally slidable with respect to each other. The thermistor 1 is mounted on the thinnest end section 2 which is received in a middle section 3, received in a middle section 4, which in turn is received in the end section 5. Each of the sections are made of stainless steel, however could be made of other metal or plastics material, for example aluminium or FORTRON (Trade Mark).

The end of the telescopic shaft remote from the thermistor 1 includes a sensor head 10. This includes fixing means 6 for mounting the sensor to the pipe over the opening of the pocket 8 and a rotatable top 7. Wires 9 pass from the thermistor 1 to the sensor head 10 to connect the thermistor 1 to control electronics (not shown) provided in the sensor head 10 for producing an electrical output dependent upon the temperature of the thermistor 1, and for outputting this to a control circuit via the top 7. The top 7 is arranged to be able to rotate independently to the fixing means 6, so that it can be moved to ensure that the electrical connection inlet 16 is in an optimum position for attaching connecting wire 14 to an electrical connection block 17 (Figure 2b). The control circuit in turn controls a corrective element, for example a heater (not shown) so that when the thermistor 1 is at a temperature below a predetermined threshold, the heater is operated to increase the temperature of the water passing through the pipe. Enough space is provided that the wires 9 can still be accommodated when the shaft is at its minimum length.

In use, the thermistor 1 is covered in a heat conductive paste and the sections of the telescopic shaft are slid, either prior to or during insertion into the pocket, with respect to each other so that the distance between the sensor head 5 and the thermistor 1 corresponds to the internal length of the pocket 8. If adjustment is performed prior to insertion the telescopic shaft is then inserted into the pocket 8 so that the thermistor 1 is pressed against the bottom of the pocket 8. The sensor head 5 is then connected to the tip of the pocket and to the pipe.

Due to the conductive paste surrounding the thermistor 1, the temperature of the water passing through the pipe is conveyed through the closed bottom of the pocket 8 and the heat paste to the thermistor 1. The resistance of the thermistor 1 is dependent upon the temperature of the water. The control electronics, which may include a resistive bridge, produces an output which is dependent upon the resistance of the thermistor 1 and hence dependent upon the temperature of the water. A controller then controls the heater depending upon the determined temperature of the water.

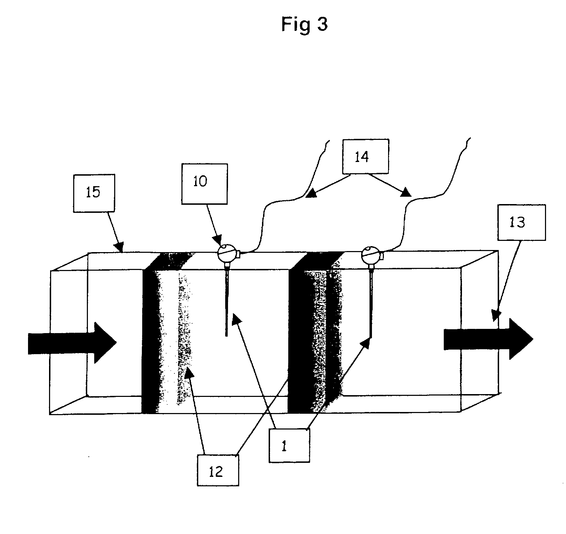

The sensor need not be provided in a pocket, but could extend directly into a fluid flow path, for example directly into an air duct 15, as shown in Figure 3. As can be seen from Figure 3, the water pipe or air duct 15 has a directional fluid flow 13 which ensures that fluid passes through heating or cooling elements 12. Sensor heads 1 are positioned at an optimum location within the duct 15 to ensure accurate reading of fluid temperature, with their position being adjustable by adjustment of the sensor.

## Claims

1. A sensor comprising a sensing element provided on one end of an extendable shaft wherein the extendable shaft is a telescopic shaft comprising a number of coaxial sections which are slidable with respect to each other to vary the length of the shaft; a mounting means provided at the other end of the extendable shaft for mounting the shaft; and electrical connections passing from the sensing element along the length of the shaft to the mounting means and fixed thereto.

2. A sensor according to claim 1, wherein the shaft includes at least four sections.

3. A sensor according to claim 1, wherein the shaft comprises five sections.

4. A sensor according to any preceding claims wherein the sensor element is a temperature or humidity sensor.

5. A sensor according to any of claims 1 to 3 wherein the sensor element is a thermistor.

6. A sensor according to any preceding claims, wherein the sensor has a maximum width allowing it to be provided in most conventional pockets.

7. A sensor according to claim 6, wherein the sensor has a maximum width of less than 6mm.
